# EUROPEAN PATENT SPECIFICATION

(11) **EP 3 273 529 B1**
(45) Date of publication and mention of the grant of the patent: **25.12.2019**
(21) Application number: 16894813.1
(22) Date of filing: 11.08.2016
(51) Int. Cl.: G01N 21/3586, H01Q 9/28, G01N 21/3581

(54) **TETRAHERTZ NEAR-FIELD DETECTOR, PHOTOCONDUCTIVE ANTENNA, AND MANUFACTURING METHOD THEREOF**
TETRAHERTZ-NAHFELDDETEKTOR, FOTOLEITFÄHIGE ANTENNE UND HERSTELLUNGSVERFAHREN DAFÜR
DÉTECTEUR EN CHAMP PROCHE TÉRAHERTZ, ET ANTENNE PHOTOCONDUCTRICE ET SON PROCÉDÉ DE FABRICATION

(30) Priority: 24.05.2016 CN 201610349988
(43) Date of publication of application: 24.01.2018
(73) Proprietor: Shenzhen Terahertz System Equipment Co., Ltd., Bao'an District Shenzhen Guangdong 518102 (CN)
(72) Inventor: PENG, Shichang, Shenzhen Guangdong 518102 (CN); PAN, Yi, Shenzhen Guangdong 518102 (CN); LI, Chen, Shenzhen Guangdong 518102 (CN); DING, Qing, Shenzhen Guangdong 518102 (CN)
(74) Representative: Müller Schupfner & Partner Patent- und Rechtsanwaltspartnerschaft mbB
(86) International application number: PCT/CN2016/094660
(87) International publication number: WO 2017/201888

(56) References cited:
- CN-A- 102 483 350
- CN-A- 102 692 383
- CN-A- 104 614 315
- CN-A- 105 589 119
- CN-A- 105 870 582
- CN-U- 203 365 739
- CN-U- 205 786 306
- JP-A- 2014 202 539
- JP-A- 2016 085 396
- KR-A- 20110 066 503
- US-A1- 2005 215 031
- US-A1- 2010 252 738
- US-A1- 2011 127 431
- US-B1- 8 274 058

## Description

### TECHNICAL FIELD

Aspects of the present disclosure relate to the terahertz technical field, and more particularly, to a terahertz near-field detector, a photoconductive antenna applied in this terahertz near-field detector, and a method of manufacturing the photoconductive antenna.

### BACKGROUND

With the development of the terahertz technology, imaging by terahertz time-domain spectroscopy has attracted more and more attention. Terahertz time-domain spectroscopy imaging has good application prospects in many fields, such as security check, spatial remote sensing, material's nondestructive test, high resolution terahertz microscope, and so on. A typical terahertz time-domain spectroscopy system mainly comprises four parts, i.e., a femtosecond pulse radiation source, a time delay system, a terahertz radiator, and a terahertz detector, wherein the femtosecond pulse radiation source outputs femtosecond laser pulses, which are divided into pump light and probe light by an optical fiber splitter. The pump light excites the terahertz radiator to radiate terahertz wave. The terahertz wave is collected by the terahertz detector to drive carriers generated by the probe light exciting the photoconductive antenna in the terahertz detector. The photocurrent signal formed by carriers' movement is extracted by a current detection device. The photocurrent signal records terahertz time-domain information. The time-domain information is subsequently processed to obtain the time-domain waveform of terahertz wave. Fourier transform is carried on the obtained time-domain waveform to obtain the frequency-domain spectrum.

Terahertz detection can be divided into near-field detection and far-field detection. This division is related with the division of antenna radiation field. D is defined as an antenna's effective radiation aperture length, λ is defined as the wavelength of the electromagnetic wave radiated by an antenna, and R is defined as the distance between the detection point and the antenna. When R≥2D²/λ, it belongs to the far-field detection, otherwise, the near-field detection. In the far-field detection, according to the imaging resolution formula ρ=Rλ/D, the spatial resolution is increasing as the imaging distance decreases. However, the imaging resolution can only peak at 2D due to the diffraction limit. While in the near-field detection, the imaging resolution can reach below D/2. Compared with the far-field detection, the near-field detection imaging can obtain a higher spatial resolution.

Terahertz near-field detectors comprise non-fenestrated and fenestrated detectors. Compared with the non-fenestrated detection way, the fenestrated near-field detection has the advantages of high integration density, high sensitivity, high signal to noise ratio, and so on.

US 2005215031 A1 discloses a photo-semiconductor device, which comprises a photoconductive semiconductor film provided with electrodes and formed on a second substrate, the semiconductor film being formed by epitaxial growth on a first semiconductor substrate different from the second substrate, the second substrate being also provided with electrodes, the electrodes of the second substrate and the electrodes of the photoconductive semiconductor film being held in contact with each other.

KR 20110066503 A discloses a manufacturing method for a terahertz wave transmitting/receiving module comprising forming a photoconductive antenna and a ball lens on a substrate. The photoconductive antenna includes a metal parallel transmission line having a central protruding portion and electrode pads formed at both ends of the metal parallel transmission line.

JP2014202539 discloses a terahertz T-shaped dipole antenna comprising a slit to limit the amount of radiation on the antenna.

### SUMMARY

The present application aims to provide a photoconductive antenna and a manufacturing method thereof. The present application also provides a terahertz near-field detector comprising the aforementioned photoconductive antenna in order to achieve imaging with high resolution.

The photoconductive antenna of the present application comprises:
a substrate;
a low-temperature gallium arsenide (GaAs) wave plate layer bonded to the substrate;
a dipole antenna, which two symmetrically arranged T-typ low-temperature grown GaAs slices and is bonded to the low-temperature GaAs wave plate layer;
an insulation layer placed on the dipole antenna by deposition; and
a perforated metal plate placed on the insulation layer, wherein the perforated metal plate is an aluminum sheet and is provided with an aperture, the center of which is aligned to the center of the dipole antenna.

In an embodiment, the substrate is a sapphire substrate.

In an embodiment, the low-temperature GaAs wave plate layer is square or circular.

In an embodiment, the low-temperature GaAs wave plate layer is bonded to the substrate by an optical adhesive layer.

In an embodiment, the insulation layer is a silicon dioxide (SiO₂) layer.

A terahertz near-field detector comprises the aforementioned photoconductive antenna, a lens, and an adjusting bracket, wherein the photoconductive antenna is integrated with the lens to be a photoconductive probe, which is placed on the adjusting bracket, and the adjusting bracket can adjust the distance between the sample and the photoconductive probe; optionally
the terahertz near-field detector also comprises an optical fiber for transmitting probe light and a current detection device connected to the photoconductive antenna.

A manufacturing method of any one of the above photoconductive antenna, comprises the following steps:
step for forming the dipole antenna, forming a separation layer on the semi-insulating GaAs substrate, low-temperature growing a GaAs film layer on the separation layer, etching the GaAs film layer to form two symmetrically arranged T-type structures;
step for bonding the low-temperature GaAs wave plate layer, bonding the dipole antenna structure obtained in the forming step to the low-temperature GaAs wave plate layer, wherein the T-type structures are adjacent to the low-temperature GaAs wave plate layer;
step for bonding the substrate, bonding the structure obtained in the step for bonding the low-temperature GaAs wave plate layer to a sapphire substrate by an epoxy layer;
step for forming the insulation layer, removing the GaAs substrate by wet etching and reactive ion etching and removing the separation layer by hydrofluoric acid (HF), and depositing a SiO₂ insulation layer on the exposed low-temperature grown GaAs film layer;
step for forming the perforated metal plate, placing the perforated metal plate on the insulation layer, wherein the perforated metal plate is an aluminum sheet and is provided with an aperture, the center of which is aligned to the center of the dipole antenna.

Since the terahertz near-field detector is configured with a perforated metal plate, the background noise can be dramatically attenuated to improve the spatial resolution of the near-field detection.

### BRIEF DESCRIPTION OF THE DRAWINGS

FIG. 1 is a diagram of partial structure of a terahertz near-field detector and a structure that matches with a terahertz radiation source and detected sample according to an embodiment of the present application.
FIG. 2 is a disassemble diagram of partial structure of the terahertz near-field detector according to an embodiment of the present application.
FIG. 3 is a structure diagram of a dipole antenna in the photoconductive antenna of the terahertz near-field detector illustrated in FIG. 2.

### DETAILED DESCRIPTION

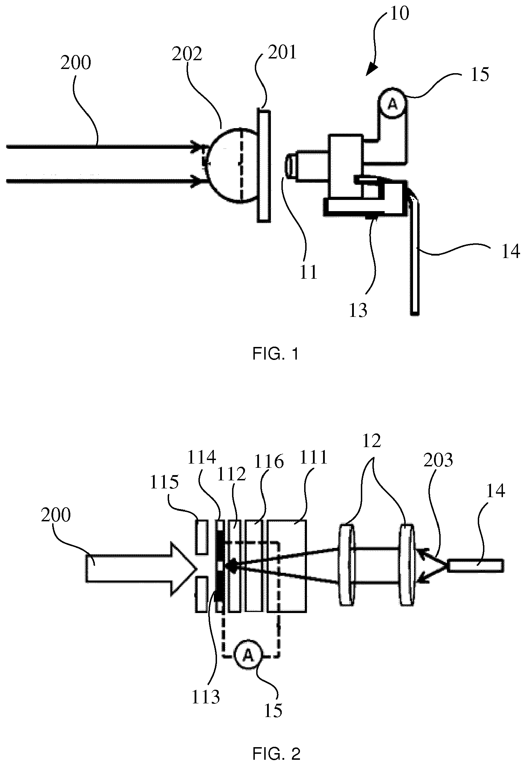

As illustrated in FIG. 1, a terahertz near-field detector 10 is proposed in one embodiment of this invention to receive terahertz waves 200 from a terahertz radiation source. The terahertz waves 200 penetrate through a sample 201 and are imaged by the terahertz near-field detector 10 so as to detect the sample 201. The terahertz waves 200 are focused by an over-hemi spherical silicon lens 202 before penetrating through the sample 201, so that terahertz waves 200 can be well collected by the terahertz near-field detector 10. Also referring to FIG. 2, the terahertz near-field detector 10 comprises a photoconductive antenna 11, a lens 12, and an adjusting bracket 13. The photoconductive antenna 11 and the lens 12 are combined to form a photoconductive probe. The photoconductive probe is placed on the adjusting bracket 13. The adjusting bracket 13 can adjust the distance between the sample 201 and the photoconductive probe, so as to accomplish the imaging of the sample 201 in different positions.

The terahertz near-field detector 10 also comprises an optical fiber 14 for transmitting probe light 203 and a current detection device 15 connected to the photoconductive antenna 11. The terahertz waves 200 drive carriers generated by the probe light 203 stimulating the photoconductive antenna 11 to produce a current signal. The time-domain spectrum of terahertz waves 200 can be obtained by analyzing and processing the current signal. The detection of the sample 201 can be achieved according to the change of terahertz spectrum according to the sample's presence and absence.

The present invention will focus on descripting the structure of the photoconductive antenna 11 in the terahertz near-field detector 10 and the manufacturing method thereof. Related structures and components not described in detail can be accomplished by referring to existing designs.

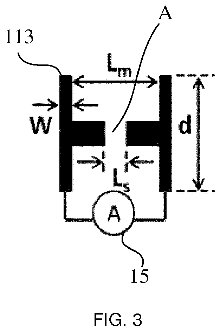

As illustrated in FIG. 2 and FIG. 3, the photoconductive antenna 11 comprises a substrate 111, a low-temperature GaAs wave plate layer 112, a dipole antenna 113, an insulation layer 114, and a perforated metal plate 115, which are placed in sequence.

In one embodiment, the substrate 111 is a circular sapphire substrate with a thickness of 1mm and a diameter of 6mm. It should be understood that, under the condition of realizing the same function, the substrate 111 can be a substrate of other materials, with a thickness of other values and with other shapes like square. It is important to note that, embodiments in this application provide examples of specific parameters and shapes. However, it is easily to understand that the parameter needs not to exactly equal to correspondingly value but can be approximate to corresponding value under acceptable error margin or design limit, and the shape can be changed adaptively. The same understanding is also applied to following specific parameters and shapes.

In one embodiment, the low-temperature GaAs wave plate layer 112 is square with a thickness of 750nm and a side length of 6mm. The low-temperature GaAs wave plate layer 112 is bonded to the substrate 111. The low-temperature GaAs wave plate layer 112 is bonded to the substrate 111 by an optical adhesive layer. In a specific embodiment, the low-temperature GaAs wave plate layer 112 is bonded to the substrate 111 by an epoxy resin layer 116 with a thickness of 3µm. The low-temperature GaAs generally refers to GaAs grown in a temperature under 600°C, such as 200°C to 300°C.

As illustrated in FIG. 3, the dipole antenna 113 is two symmetrically arranged low-temperature grown GaAs slices, both of which are T-type. The maximum interval Lm between the dipole antennas 113 is 200µm, and the minimum interval Ls is 5µm. The length d of the dipole antenna 113 is 20µm, and the width of the dipole antenna 113 is 10µm. The dipole antenna 113 is bonded to the low-temperature GaAs wave plate layer 112. The current detection device 15 is connected to the dipole antenna 113 to extract the current signals formed from carriers, which are generated by terahertz waves 200 driving the dipole antenna 113.

In an embodiment, the insulation layer 114 is a silicon dioxide layer with a thickness of 500nm.

In an embodiment, the perforated metal plate 115 is an aluminum sheet with a thickness of 300nm and a side length of 2mm. The aluminum sheet is provided with a square aperture with a side length of 20µm. The center of the square aperture is aligned to the center of the dipole antenna 113. It should be understood that, the aperture can also be a circular aperture. The center of the dipole antenna 113 refers to the geometric center point of the two T-type low-temperature GaAs slices, as shown by A of FIG. 3.

The work procedure of the terahertz near-field detector in the terahertz time-domain spectral system is mainly as follow. After being transmitted by optical fiber, probe light is expanded and then focused on dipole antenna by a pair of lenses to excite the dipole antenna to generate carriers. Terahertz waves penetrate through a sample to be received by the terahertz near-field detector to drive carriers to form current signals to be extracted by a current detection device. The photoconductive antenna in the terahertz near-field detector is combined with the lenses to be a photoconductive probe and to be amounted on an adjusting bracket. The adjusting bracket adjusts the distance between the sample and the probe to realize the sample's three dimensional terahertz imaging scan.

This invention also provides a manufacturing method of the photoconductive antenna, which comprises the following steps:
step for forming the dipole antenna, forming a separation layer on the semi-insulating GaAs substrate, low-temperature growing a GaAs film layer on the separation layer, etching the GaAs film layer to form two symmetrically arranged T-type structures;
step for bonding the low-temperature GaAs wave plate layer, bonding the dipole antenna structure obtained in the forming step to the low-temperature GaAs wave plate layer, wherein the T-type structures are adjacent to the low-temperature GaAs wave plate layer;
step for bonding the substrate, bonding the structure obtained in the step for bonding the low-temperature GaAs wave plate layer to a sapphire substrate by an epoxy layer;
step for forming the insulation layer, removing the GaAs substrate by wet etching and reactive ion etching and removing the separation layer by HF, and depositing SiO₂ insulation layer on the exposed low-temperature grown GaAs film layer;
step for forming the perforated metal plate, placing the perforated metal plate on the insulation layer.

In an embodiment, the separation layer is an aluminium arsenide (AlAs) layer with a thickness of 100nm.

In an embodiment, the thickness of the GaAs substrate is 650µm. The thickness of the low-temperature GaAs layer is 1.5µm.

In an embodiment, in the step for forming the insulation layer, about 600µm thickness of GaAs substrate is removed by wet etching. When close to the AlAs layer, the remaining 50µm GaAs substrate is removed through reactive ion etching by a mixture reagent of sulfur hexafluoride (SF₆) and silicon tetrachloride (SiCl₄). The AlAs layer is removed by HF to expose a low-temperature grown GaAs film layer, whose thickness is about 1µm.

In an embodiment, the insulation layer is placed on the exposed low-temperature grown GaAs film layer by deposition. The insulation layer is a silicon dioxide layer with a thickness of 500nm.

In an embodiment, the perforated metal plate is an aluminum sheet with a thickness of 300nm and a side length of 2mm. The aluminum sheet is provided with a square aperture with a side length of 20µm. The center of the aperture is aligned to the center of the dipole antenna with an error of about plus or minus 2µm.

The use of perforated aluminum sheet can dramatically attenuate background noise, so as to improve the spatial resolution of near-field detection.

The technical features in the above embodiments can be combined arbitrarily. For simplicity, not all possible combinations of the technical features in the above embodiments are described. However, these combinations of the technical features should be within the scope recited in this specification, provided that there is no conflict in these combinations of the technical features.

The above embodiments merely express several implementing ways specifically and in detail. The scope of the present application should be determined by the terms of the accompanying claims.

## Claims

1. A photoconductive antenna (11) comprising:
a substrate (111);
a low-temperature GaAs wave plate layer (112) bonded to the substrate (111);
a dipole antenna (113), which comprises two symmetrically arranged T-type low-temperature grown GaAs slices and is bonded to the low-temperature GaAs wave plate layer (112);
an insulation layer (114) placed on the dipole antenna (113) by deposition; and
a perforated metal plate (115) placed on the insulation layer (114), wherein
the perforated metal plate (115) is an aluminum sheet and is provided with an aperture, the center of which is aligned to the center of the dipole antenna (113).

2. The photoconductive antenna (11) of claim 1, wherein the substrate (111) is a sapphire substrate.

3. The photoconductive antenna (11) of claim 1, wherein the low-temperature GaAs wave plate layer (112) is square or circular.

4. The photoconductive antenna (11) of claim 1, wherein the low-temperature GaAs wave plate layer (112) is bonded to the substrate (111) by an optical adhesive layer.

5. The photoconductive antenna (11) of claim 1, wherein the insulation layer (114) is a silicon dioxide layer.

6. A terahertz near-field detector (10) comprising the photoconductive antenna (11) according to any one of claims 1-5, a lens (12), and an adjusting bracket (13), the photoconductive antenna (11) is integrated with the lens (12) to be a photoconductive probe, which is placed on the adjusting bracket (13), and the adjusting bracket (13) can adjust the distance between the sample (201) and the photoconductive probe.

7. The terahertz near-field detector (10) of claim 6 also comprising an optical fiber (14) for transmitting probe light (203) and a current detection device (15) connected to the photoconductive antenna (11).

8. A manufacturing method of the photoconductive antenna (11) according to any one of claims 1-5, comprising the following steps:
step for forming the dipole antenna (113), forming a separation layer on the semi-insulating GaAs substrate, low-temperature growing a GaAs film layer on the separation layer, etching the GaAs film layer to form two symmetrically arranged T-type structures;
step for bonding the low-temperature GaAs wave plate layer (112), bonding the dipole antenna structure obtained in the forming step to the low-temperature GaAs wave plate layer (112), wherein the T-type structures are adjacent to the low-temperature GaAs wave plate layer (112);
step for bonding the substrate (111), bonding the structure obtained in the step for bonding the low-temperature GaAs wave plate layer (112) to a sapphire substrate by an epoxy layer;
step for forming the insulation layer (114), removing the GaAs substrate by wet etching and reactive ion etching and removing the separation layer by HF, and depositing a SiO₂ insulation layer on the exposed low-temperature grown GaAs film layer;
step for forming the perforated metal plate (115), placing the perforated metal plate on the insulation layer (114), wherein the perforated metal plate (115) is an aluminum sheet and is provided with an aperture, the center of which is aligned to the center of the dipole antenna (113).

## Patentansprüche

1. Eine photoleitende Antenne (11), bestehend aus:
einem Substrat (111)
einer Niedertemperatur-Wellenplattenschicht aus GaAs (112), die mit dem Substrat (111) verbunden ist;
einer Dipolantenne (113), die zwei symmetrisch angeordnete T-förmige, bei niedriger Temperatur gezüchtete GaAs-Scheiben enthält und mit der Niedertemperatur-Wellenplattenschicht (112) aus GaAs verbunden ist;
einer Isolationsschicht (114), die durch Ablagerung auf der Dipolantenne (113) angebracht wird, und
einer perforierten Metallplatte (115), die sich auf der Isolationsschicht (114) befindet; wobei
die perforierte Metallplatte (115) ein Aluminiumblech ist, das mit einer Öffnung versehen ist, deren Mitte auf die Mitte der Dipolantenne (113) ausgerichtet ist.

2. Die photoleitende Antenne (11) nach Anspruch 1, wobei das Substrat (111) ein Saphirsubstrat ist.

3. Die photoleitende Antenne (11) nach Anspruch 1, wobei die Niedertemperatur-Wellenplattenschicht (112) aus GaAs quadrat- oder kreisförmig ist.

4. Die photoleitende Antenne (11) nach Anspruch 1, wobei die Niedertemperatur-Wellenplattenschicht (112) aus GaAs durch eine optische Klebeschicht mit dem Substrat (111) verbunden ist.

5. Die photoleitende Antenne (11) nach Anspruch 1, wobei die Isolationsschicht (114) eine Siliziumdioxidschicht ist.

6. Ein Terahertz-Nahfelddetektor (10), bestehend aus einer photoleitenden Antenne (11) nach einem der Ansprüche 1-5, eine Linse (12) und ein Einstellbügel (13), wobei die photoleitende Antenne (11) mit der Linse (12) zusammen eine photoleitende Sonde bildet, die sich auf dem Einstellbügel (13) befindet, wobei der Einstellbügel (13) den Abstand zwischen der Probe (201) und der photoleitenden Sonde verstellen kann.

7. Der Terahertz-Nahfelddetektor (10) nach Anspruch 6, der ferner einen Lichtwellenleiter (14) enthält, um das Sondenlicht (203) zu übertragen, und ein Stromerfassungsgerät (15), das mit der photoleitenden Antenne (11) verbunden ist.

8. Eine Herstellungsmethode der photoleitenden Antenne (11) nach einem der Ansprüche 1-5, die die folgenden Schritte umfasst:
Bildung der Dipolantenne (113), Bildung einer Trennschicht auf dem halbisolierenden GaAs-Substrat, Niedertemperaturzüchtung einer GaAS-Filmschicht auf der Trennschicht, Ätzung der GaAs-Filmschicht, um zwei symmetrisch angeordnete T-förmige Strukturen zu bilden;
Verbindung der Niedertemperatur-Wellenplattenschicht aus GaAs (112), Verbindung der Dipolantenne, die bei der Bildung der Niedertemperatur-Wellenplattenschicht aus GaAs (112) erzielt wird, wobei die T-förmigen Strukturen sich neben der Niedertemperatur-Wellenplattenschicht aus GaAs (112) befinden;
Verbindung des Substrats (111), Verbindung der Struktur, die bei der Verbindung der Niedertemperatur-Wellenplattenschicht aus GaAs (112) mit einem Saphirsubstrat durch eine Epoxidschicht erzielt wird;
Bildung der Isolationsschicht (114), Entfernung des GaAs-Substrats durch Nassätzung und durch reaktives lonenätzen, Entfernung der Trennschicht durch HF, und Ablagerung einer SiO₂-Isolationsschicht auf der GaAs-Filmschicht, die bei niedrigen Temperaturen gezüchtet wird;
Bildung der perforierten Metallplatte (115), Platzierung der perforierten Metallplatte auf die Isolationsschicht (114), wobei die perforierte Metallplatte (115) aus Aluminiumblech besteht und mit einer Öffnung versehen ist, wobei die Mitte dieser Öffnung auf die Mitte der Dipolantenne (113) ausgerichtet ist.

## Revendications

1. Une antenne photoconductrice (11) comprenant :
un substrat (111) ;
une couche de lame d'onde GaAs (112) à basse température liée au substrat (111) ;
une antenne dipôle (113), comprenant deux plaquettes de GaAs fabriquées à basse température de type T agencées symétriquement et liées à la couche de lame d'onde GaAs (112) ;
une couche isolante (114) placée sur l'antenne dipôle (113) par dépôt ; et
une plaque de métal perforée (115) placée sur la couche isolante (114), dans laquelle la plaque de métal perforée (115) est une feuille d'aluminium et est doté d'une ouverture, dont le centre est aligné sur le centre de l'antenne dipôle (113).

2. L'antenne photoconductrice (11) de la revendication 1, dans laquelle le substrat (111) est un substrat de saphir.

3. L'antenne photoconductrice (11) de la revendication 1, dans laquelle la couche de lame d'onde GaAs (112) est carrée ou circulaire.

4. L'antenne photoconductrice (11) de la revendication 1, dans laquelle la couche de lame d'onde GaAs (112) est liée au substrat (111) par une couche adhésive optique.

5. L'antenne photoconductrice (11) de la revendication 1, dans laquelle la couche isolante (114) est une couche de dioxyde de silicium.

6. Un détecteur de champ proche térahertz (10) comprenant l'antenne photoconductrice (11) selon l'une quelconque des revendications 1 à 5, une lentille (12), et un étrier d'ajustement (13), l'antenne photoconductrice (11) est intégrée à la lentille (12) en tant que sonde photoconductrice, et est placée sur l'étrier d'ajustement (13), et l'étrier d'ajustement (13) peut ajuster la distance entre l'échantillon (201) et la sonde photoconductrice.

7. Le détecteur de champ proche térahertz (10) de la revendication 6 comprenant également une fibre optique (14) afin de transmettre la lumière de la sonde (203) et un dispositif de détection de courant (15) connecté à l'antenne photoconductrice (11).

8. Un procédé de fabrication d'antenne photoconductrice (11) selon l'une quelconque des revendications 1 à 5, comprenant les étapes suivantes :
une étape de formage de l'antenne dipôle (113), de formage d'une couche de séparation sur le substrat GaAs semi-isolant, de fabrication d'une couche fine de GaAs à basse température sur la couche de séparation, de gravure de la couche de filme GaAs pour former deux structures de type T agencées symétriquement ;
une étape de liaison de la couche de lame d'onde GaAs (112) à basse température, de liaison de la structure d'antenne dipôle obtenue à l'étape de formage à la couche de lame d'onde GaAs (112), dans laquelle les structures de type T sont adjacentes à la couche de lame d'onde GaAs (112) ;
une étape de liaison du substrat (111), de liaison de la structure obtenue à l'étape de liaison de la couche de lame d'onde GaAs (112) à basse température à un substrat de saphir par une couche d'époxy ;
une étape de formage de couche isolante (114), de retrait du substrat GaAs par gravure humide et gravure ionique réactive et de retrait de la couche de séparation par HF, et de dépôt une couche isolante SiO₂ sur la couche de film GaAs exposée fabriquée à basse température ;
une étape de formage de plaque de métal perforée (115), de placement de la plaque de métal perforée sur la couche isolante (114), dans laquelle la plaque de métal perforée (115) est une feuille d'aluminium dotée d'une ouverture, dont le centre est aligné sur le centre de l'antenne dipôle (113).
